# EUROPÄISCHE PATENTSCHRIFT

(11) **EP 1 500 579 B1**
(45) Veröffentlichungstag und Bekanntmachung des Hinweises auf die Patenterteilung: **11.04.2007**
(21) Anmeldenummer: 04016418.8
(22) Anmeldetag: 13.07.2004
(51) Int. Cl.: B62D 53/06, B60P 1/64

(54) **Fahrzeuganordnung mit längsverschiebbaren Teilen und Verfahren zur Längsverschiebung**
Vehicle with longitudinally moveable parts and method for moving the parts longitudinally
Véhicule avec les pièces longitudinalement mobiles et méthode pour déplacer les pièces longitudinalment

(30) Priorität: 19.07.2003 DE 10332911
(43) Veröffentlichungstag der Anmeldung: 26.01.2005
(73) Patentinhaber: Schmitz Gotha Fahrzeugwerke GmbH, 99867 Gotha (DE)
(72) Erfinder: Koch, Josef, 89081 Ulm (DE)
(74) Vertreter: Weber, Gerhard

(56) Entgegenhaltungen:
- EP-A- 0 869 049
- DE-A- 2 927 422
- US-A- 4 877 293
- US-A- 5 137 296
- US-A- 5 314 201
- US-A- 5 346 233
- US-A- 5 460 237

## Beschreibung

Die Erfindung betrifft eine Fahrzeuganordnung mit in Längsrichtung relativ zueinander verschiebbaren und in mehreren diskreten Längspositionen arretierbaren Teilen und ein Verfahren zur Längsverschiebung bei einer solchen Fahrzeuganordnung.

Aus der US 4 877 293 ist beispielsweise ein Sattelauflieger-Fahrgestell bekannt, bei welchem zur Einstellung einer gewünschten oder erforderlichen Lastverteilung ein Laderahmen, welcher auf einer Sattelkupplung eines Zugfahrzeugs aufliegt, in Längsrichtung relativ zu einem Fahrgestellrahmen des Sattelaufliegers verschiebbar ist, indem Träger des Fahrgestellrahmens und des Laderahmens in Gleit- oder Rollenlagern ineinander geführt sind. Am Laderahmen ist ein Arretierbolzen quer zur Verschieberichtung des Fahrgestellrahmens beweglich. Der Fahrgestellrahmen weist als Gegenstrukturen zu dem Arretierbolzen eine Reihe von Durchbrüchen in einem Träger auf, in welche der Arretierbolzen eingreifen kann und welche diskrete arretierbare relative Längspositionen von Laderahmen und Fahrgestellrahmen bestimmen. Zur Verschiebung von Fahrgestellrahmen relativ zum Laderahmen zwischen einer Startposition und einer Zielposition wird bei gebremsten Rädern des Fahrgestellrahmens der Arretierbolzen aus seiner Arretierstellung in eine Lösestellung bewegt, der Laderahmen mittels des Zugfahrzeugs bis in die Zielposition verschoben und der Arretierbolzen in die entsprechende Öffnung im Träger des Fahrgestellrahmens eingeführt. Der Arretierbolzen ist in einem Zylinder geführt und durch eine Druckfeder in seiner Arretierstellung stabilisiert. Das Lösen des Arretierbolzens aus der Arretierstellung erfolgt durch pneumatisches oder hydraulisches Bewegen des Kolbens entgegen der schließend wirkenden Federkraft. Die Betätigung des Arretierbolzens kann sowohl vom Fahrzeugheck als auch vom Fahrerhaus des Zugfahrzeugs aus erfolgen.

Die EP 0 998 403 B1 beschreibt einen längenveränderbaren Anhänger, bei welchem ein von Hand verschiebbares Arretierelement auf einen Druckluftschalter in der Weise einwirkt, dass in arretierter Stellung die Bremsen des Anhängers gelöst sind und bei Bewegen des Arretierelements aus der Arretierstellung die Bremsen automatisch mit Druckluft beaufschlagt und angelegt - werden. In der US 5 813 682 ist für ein ausziehbares Fahrgestell beschrieben, nach manuellem Lösen der Arretierung an einer gewünschten Zielposition manuell ein Anschlagsglied anzubringen, eine Verschiebung bis zu dem Anschlagelement vorzunehmen und die verschiebbaren Teile erneut zu arretieren.

Aus der DE 199 05 676 A1 ist ein Anhänger mit einer teleskopierbaren Deichsel bekannt, bei welcher ein die Kupplungsöse tragendes Auszugrohr in einem Hauptrohr längsverschiebbar gelagert ist und zur Festlegung in einer von mehreren Ausziehlängen eine Lochreihe und einen durchsteckbaren Bolzen aufweist.

Insbesondere bei Containerfahrgestellen ist es ferner bekannt, am Heck eine in Längsrichtung ausziehbare Vorrichtung z. B. mit zusätzlichen Verriegelungen für Container vorzusehen.

Die US 5 137 296 beschreibt ein längenveränderbares Trailerchassis, bei welchem Verriegelungsbolzen pneumatisch entgegen einer Federkraft aus Veriegelungs-Aussparungen lösbar sind. Dabei kann auch vorgesehen sein, einen Verschiebeweg über mehrere Aussparungen hinaus vorzugeben und den Verschiebeweg über eine mechanische Sensoranordnung zu überwachen und die Verriegelungsbolzen erst vor der als Zielposition vorgesehenen Aussparung in Richtung der Verriegelungsstellung zurück zu bewegen.

Aus der US 5 346 233 ist ein längenveränderbares Chassis bekannt, bei welchem der Benutzer nach dem Lösen von Verriegelungsbolzen Hydraulikzylinder zur Längenveränderung aktivieren kann.

Der vorliegenden Erfindung liegt die Aufgabe zugrunde, eine Fahrzeuganordnung mit einem ersten und einem dazu längsverschiebbaren zweiten Teil, welche vorteilhaft handhabbar ist, anzugeben.

Die Erfindung ist im unabhängigen Anspruch beschrieben. Die abhängigen Ansprüche enthalten vorteilhafte Ausgestaltungen und Weiterbildungen der Erfindung.

Eine für den Benutzer vereinfachte Relativverschiebung zwischen erstem und zweitem Teil mittels einer Verschiebeeinrichtung, welche mit dem ersten und dem zweiten Teil verbunden ist und die Relativverschiebung zwischen den beiden Teilen bewirkt, ist dadurch gegeben, dass bei Erreichen der Lösestellung der Arretiereinrichtung durch Steuermittel selbsttätig die Verschiebeeinrichtung aktiviert und die Relativverschiebung eingeleitet wird. Der Benutzer braucht hierzu über eine Bedieneinheit nur einen einzigen Vorgang auszulösen und die Steuermittel veranlassen die Abfolge der einzelnen Schritte. Die Verschiebeeinrichtung ist vorzugsweise druckmittelbetätigt, insbesondere pneumatisch.

Eine Bedieneinheit zum Start eines Lösevorgangs kann z. B. am ersten oder zweiten Teil der Fahrzeuganordnung selbst angebracht sein. Die Bedieneinheit kann z. B. elektrische Schalter oder Druckmittelventile als Bedienelemente enthalten. Die, Bedieneinheit kann auch mechanische Bedienelemente enthalten, welche, z. B. über eine Hebel- oder Seilzuganordnung, ihrerseits auf elektrisch oder über Druckmittel betätigte Aktuatoren wirken. Die Bedienelemente können gegebenenfalls richtungsselektiv für die Relativverschiebung angeführt sein. Insbesondere bei über die Verfahrung eines motorisierten Zugfahrzeugs vorgenommener Relatiwerschiebung von erstem und zweitem Teil ist eine Bedieneinheit vorteilhafterweise im Führerhaus des Zugfahrzeugs angeordnet und vorzugsweise als elektronische bzw. elektrische Bedieneinheit ausgeführt. Die Bedieneinheit kann leitungsgebunden oder über Funk mit elektrischen Aktuatoren, z. B. Elektromotoren, Elektromagneten und gegebenenfalls Sensoren an dem ersten und/oder dem zweiten Teil zur Übertragung von Signalen in Verbindung stehen.

Durch das Halten des wenigstens einen Arretierelements in der gelösten Stellung über eine Verzögerung und selbsttätiges Bewegen der wenigstens ein Arretierelement an dem ersten Teil und mehrere Gegenelemente an dem anderen Teil enthaltenden Arretiereinrichtung aus einer Löseposition in Richtung einer Verriegelungsposition durch die Stellmittel ohne Einwirken des Benutzers spätestens bei Erreichen der Zielposition kann für die Relativverschiebung der beiden Teile die Tätigkeit des Benutzers erheblich vereinfacht werden, ohne dass die Sicherheit der Anordnung beeinträchtigt wäre. Besonders vorteilhaft ist die Bewegung der Arretiereinrichtung bereits vor Erreichen der Zielposition der Relativverschiebung in eine Anlegeposition, insbesondere unter dem Einfluss einer Schließkraft, aus welcher beim Erreichen der Zielposition eine weitere Bewegung der Arretiereinrichtung in eine Verriegelungsstellung erfolgt. Besonders vorteilhaft ist die Anlage des Arretierelements an eine Gleitfläche des zweiten Teils unter der Einwirkung der Schließkraft. Bei fortgesetzter Verschiebung greift das Arretierelement bei Erreichen der Zielposition selbsttätig und sicher in das in Fortsetzung der Gleitfläche liegende Gegenelement ein.

Ohne Beschränkung der Allgemeinheit sei im folgenden angenommen, dass bei der Bewegung der Arretiereinrichtung zwischen verschiedenen Stellungen quer zur Längsrichtung das Arretierelement beweglich und die Gegenelemente feststehend seien. Das Arretierelement ist in bevorzugter Ausführung ein an einem Teil befestigter Bolzen, welcher unter der Einwirkung einer Schließkraft in Eingriff mit einer Gegenstruktur des anderen Teils gedrängt und gehalten ist und vorzugsweise entgegen der Schließkraft aus der Verriegelungsstellung in eine Lösestellung verschiebbar ist. Die Schließkraft kann insbesondere eine durch Gasdruck, komprimierbares Elastomer oder eine Stahlfeder erzeugte Federkraft sein. Die Bewegung des Arretierelements aus der Verriegelungsstellung in die Lösestellung kann durch an sich bekannte Mittel erfolgen, insbesondere manuell mechanisch, auch über Hebel- und/oder Seilzuganordnungen, oder vorzugsweise kraftunterstützt mit elektromagnetisch oder insbesondere pneumatisch oder hydraulisch betätigte Aktuatoren, welche ihrerseits wieder über Hebel- und/oder Seilzuganordnungen auf das Arretierelement wirken können. Vorzugsweise ist an jedem Längsträger wenigstens ein Arretierelemlent vorgesehen, wobei die mehreren Arretierelemente vorteilhaft gemeinsam betätigt sind. Insbesondere können zwei Arretierelemente gegenüberliegend gegen eine Fahrzeugmittelebene versetzt vorgesehen sein.

Das halten des Arretierelements in der Lösestellung kann z B. durch eine lösbare Rastvorrichtung mechanisch erfolgen. In anderer Ausführung kann ein z. B. elektromagnetischer, hydraulischer oder pneumatischer Aktuator die Lösestellung halten. Die Lösestellung kann dabei nicht nur punktuell, sondern auch als Wegbereich verstanden werden, innerhalb dessen das Arretierelement nicht in ein Gegenelement der Arretiereinrichtung an dem anderen Teil eingreift. Insbesondere kann auch die Anlegestellung als eine Grenze eines solchen Bereichs der Lösestellung angesehen sein.

Das gegenüber dem Lösevorgang verzögerte Erreichen der Anlegestellung des Arretierelements kann sowohl mit einer vorgebbaren Zeitverzögerung als auch mit einer vom Verschiebeweg abhängigen Verzögerung in hierzu vorhandenen Stellmitteln erfolgen.

Eine zeitverzögerte Bewegung kann in einer ersten Ausführung beispielsweise elektronisch realisiert sein, insbesondere durch einen getakteten Zähler oder eine monostabile Analogschaltung mit aufladbarer Kapazität. Mit Erreichen der Lösestellung des Arretierelements, oder, wenn die Zeit für die Bewegung des Arretierelements aus der Arretierstellung in die Lösestellung bekannt und hinreichend konstant ist, auch schon mit Beginn des Lösevorgangs, beginnt die elektronisch voreingestellte Verzögerungszeit, nach deren Ablauf das Arretierelement aus der Lösestellung in die Anlegestellung bewegt wird, z. B. durch Deaktivieren eines Aktuators.

In anderer Ausführung kann eine Zeitverzögerung in den Steuermitteln mechanisch durch gebremste Bewegung des Arretierelements aus einer extremen Lösestellung in Richtung der Arretierstellung bis zu der Anlegestellung realisiert sein, insbesondere durch allmähliches Entleeren des Druckraums eines druckmittelbetätigten Aktuators, wofür z. B. eine Entlastungsleitung geringen Querschnitts aus dem Druckraum vorgesehen sein kann.

Eine wegabhängige Verzögerung der Bewegung des Arretierelements aus der Lösestellung in die Anlegestellung kann durch mechanische Elemente der Stellmittel erfolgen, wobei z. B. Anlaufkurven eine Zurückbewegung des Arretierelements (oder eines an dessen Bewegung gekoppelten weiteren Elements) nach Erreichen der Lösestellung verhindern und erst zulassen, wenn sich das Arretierelement durch Relativverschiebung von erstem und zweitem Teil von der vorherigen Längsposition entfernt hat. In anderer vorteilhafter Ausführung kann das an einem Teil angeordnete Arretierelement in der Lösestellung durch ein Rastelement, z. B. eine Sperrklinke gehalten sein und Auslösestrukturen an dem anderen Teil bei der Verschiebung aus der Startposition und vor Erreichen der Zielposition das Rastelement entsperrend betätigen.

Eine bevorzugte Ausführung mit wegabhängiger Verzögerung der Bewegung des Arretierelements von der Lösestellung in die Anlegestellung sieht eine Sensoranordnung zur Messung eines Weges der Relativverschiebung und/oder einer Position der beiden Teile zueinander vor. Eine solche Sensoranordnung kann beispielsweise wenigstens einen Sensor an einem der beiden relativ zueinander bewegten Teile und Positionsmarken an dem anderen Teil enthalten, wobei der Sensor die Positionsmarken während der Relativverschiebung erkennt und die Erkennung einer Positionsmarke dazu herangezogen werden kann, die Bewegung des Arretierelements aus der Löseposition in die Anlegeposition auszulösen. Die Positionsmarken sind so angeordnet, dass die wegabhängige Verzögerung in dem vorgesehenen Maß eintritt. Der Sensor kann z. B. ein mechanischer, magnetischer, elektromagnetischer, optischer oder kombinierter Sensor sein und die Positionsmarken sind auf die Sensorart abgestimmt.

In einer ersten einfachen Ausführung können alle Positionsmarken in gleicher Art ohne individualisierende Kennzeichen oder Ausführung sein. Gemäß einer Weiterbildung können die Positionsmarken individuell codiert sein, beispielsweise in Form von berührungslos abfragbaren passiven Transpondern, was die Möglichkeit eröffnet, für die Relativverschiebung von erstem und zweitem Teil eine Zielposition durch eine Codierung vorzugeben. Dies ist insbesondere von Vorteil bei Einsatz einer elektronischen Bedieneinheit mit der Möglichkeit der Vorgabe einer bestimmten Zielposition. Bei nicht individualiserten Positionsmarken kann vorgesehen sein, insbesondere bei elektronischer Bedieneinheit, eine ununterbrochene Verschiebung über mehrere Längspositionen hinweg vorzugeben. In anderer vorteilhafter Anordnung kann die Weg- oder Positionssensoranordnung durch einen Weg-Meßaufnehmer, insbesondere nach Art eines Seilzug-Wegaufnehmers ausgeführt sein. Eine über eine Sensoranordnung gemessene Position kann vorteilhafterweise auf einer Bedieneinheit angezeigt werden.

Eine Verzögerung der Bewegung der Arretiereinrichtung aus der Lösestellung zurück in Richtung der Verriegelungsstellung oder einer Anlegestellung kann in anderer Ausführung auch dadurch erfolgen, dass der Benutzer ein den Lösevorgang startendes Bedienelement einer Bedieneinheit betätigt hält.

Die einzelnen geschilderten Merkmale können in verschiedener Weise auch kombiniert realisiert sein, wofür nachfolgend einige Beispiele unter Bezugnahme auf die Abbildungen gegeben sind. Dabei zeigt:
- Fig. 1: eine teleskopierbare Anhängerdeichsel,
- Fig. 2: einen Bewegungsverlauf eines Arretierelements zu Fig. 1,
- Fig. 3: einen pneumatischen Frontauszug,
- Fig. 4: einen Bewegungsablauf eines Arretierelements zu Fig. 3,
- Fig. 5: einen pneumatischen Heckauszug,
- Fig. 6: einen Bewegungsablauf eines Arretierelements zu Fig. 5,
- Fig. 7: ein längenveränderbares Fahrgestell.

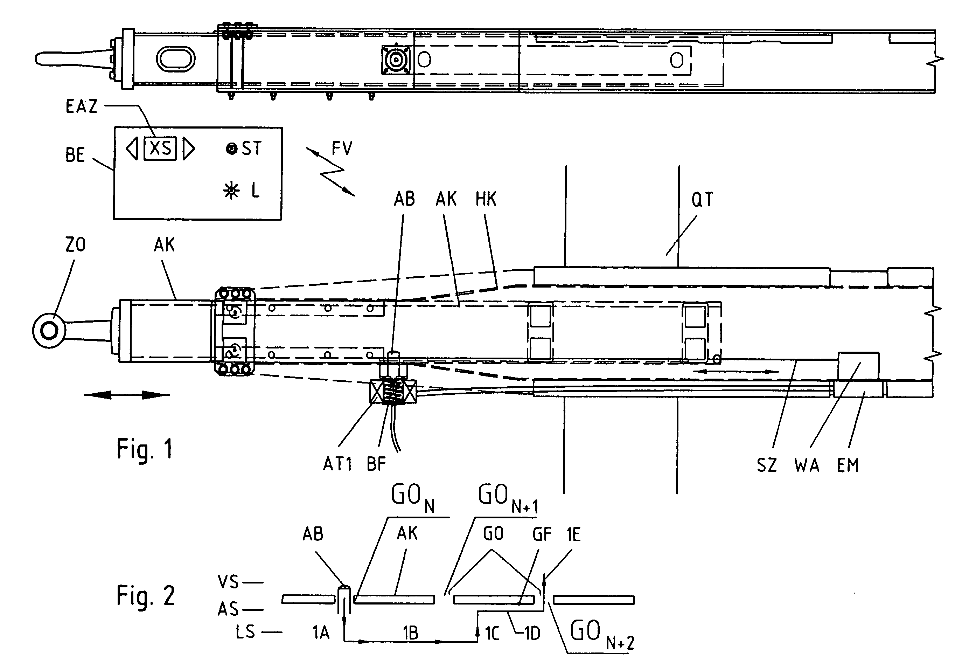

In Fig. 1 ist in geschnittener Draufsicht eine teleskopierbare Zugdeichselanordnung skizziert. Ein Auszugkörper AK ist in einem Hauptkörper in Längsrichtung LR verschiebbar geführt und ist in mehreren diskreten Längspositionen durch Eingriff eines am Hauptkörper befestigten Arretierbolzens in je eine von mehreren Öffnungen GO (Fig. 2) im Auszugkörper AK festlegbar. Der Hauptkörper ist über angedeutete Querträger QT mit dem Fahrgestellrahmen eines Anhängers verbunden. Der Auszugkörper AK weist an seinem in Fahrtrichtung vorne liegenden Ende eine Zugöse ZO auf, welche in eine Kupplung eines Zugfahrzeugs eingehängt werden kann.

Der Arretierbolzen AB nimmt unter der Einwirkung einer vorgespannten Feder als Ruhestellung eine Verriegelungsstellung ein, in welcher er in eine der Öffnungen GO im Auszugkörper eingreift. Der Arretierbolzen kann manuell oder vorzugsweise mittels eines druckmittelbetätigten oder elektrisch betätigten Aktuators AT1 aus seiner gezeichneten Verriegelungsstellung quer zur Längsrichtung entgegen der Schließkraft der Feder BF in eine Lösestellung bewegt werden, in welcher er nicht in eine der Öffnungen GO eingreift, so dass der Auszugkörper mittels eines (nicht mit eingezeichneten) Zugfahrzeugs in Längsrichtung eingeschoben oder ausgezogen werden kann (Pfeile in Fig. ). Vorzugsweise ist bei dem Arretierbolzen ein Sensor vorgesehen, welcher Löse- und/oder Verriegelungsstellung detektiert. Im skizzierten Beispiel sei als Aktuator AT1 ein Elektromagnet angenommen, welcher aus einem am Anhänger angebrachten Steuergerät EM angesteuert sei. Das Steuergerät EM steht über eine Funkverbindung FV mit einem im Fahrerhaus des Zugfahrzeugs befindlichen Bedieneinheit BE in Signalverbindung. Am Anhänger ist als Sensoranordnung für die Längsposition des Auszugkörpers relativ zum Hauptkörper ein am Hauptkörper befestigter und mit dem freien Ende eines Seilzugs SZ am Auszugkörper AK eingehängter Seilzug-Wegaufnehmer vorhanden. Die Positionsdaten des Wegaufnehmers WA werden in dem Steuergerät EM aufgenommen. Die Versorgung der elektrischen bzw. elektronischen Geräte auf Anhängerseite erfolgt vorzugsweise aus dem Bordnetz des Zugfahrzeugs über nicht dargestellte Leitungen in an sich gebräuchlicher Weise.

In der Bedieneinrichtung BE kann eine Eingabeeinrichtung EAZ für eine Zielposition XS einer beabsichtigten Relativverschiebung von Auszugkörper und Hauptkörper gegeben sein. Zusätzlich kann die tatsächliche aktuelle Längsposition aus den Positionsdaten des Wegaufnehmers WA anzeigbar sein. Die Vorgehensweise für eine solche Relativverschiebung kann beispielsweise wie folgt angegeben werden, wobei die Querstellung und Längsposition des Arretierbolzens relativ zum Auszugkörper AK im Verlauf der Relativverschiebung in Fig. 2 skizziert ist.
1A) Nach Eingabe der Ziel-Längsposition XS startet der Fahrer durch Betätigung des Bedienelements ST den Vorgang, wodurch über das Steuergerät EM der elektromagnetische Aktuator AT1 angesteuert wird und den Arretierbolzen aus der Verriegelungsstellung VS in eine Lösestellung LS bewegt und in dieser hält. Die Lösestellung des Arretierbolzens kann detektiert und in der Bedieneinheit BE akustisch oder optisch (L) ausgegeben werden.
1B) Bei in Lösestellung gehaltenem Arretierbolzen und gebremstem Anhänger fährt der Fahrer das Zugfahrzeug je nach Zielposition vor oder zurück und verschiebt den Auszugkörper relativ zum Hauptkörper und zum an diesem befestigten Arretierbolzen. Die sich dabei fortlaufend ändernden Positionsdaten des Wegaufnehmers WA werden in dem Steuergerät EM aufgenommen und dort oder vorzugsweise nach Übermittlung an die Bedieneinheit mit der Zielposition oder damit verknüpften Position verglichen. Soll im angenommenen Beispiel eine Relativverschiebung von einem Eingriff des Arretierbolzens AB in der Öffnung GO_{N} des Auszugkörpers in die übernächste Öffnung GO_{N+2} vorgenommen werden, bleibt der Arretierbolzen bis zu einer Verschiebung über die Öffnung GO_{N+1} hinaus in der Lösestellung LS.
1 C) Vor Erreichen der Zielposition mit dem Arretierbolzen noch vor der Öffnung GO_{N+2}, aber nach der Öffnung GO_{N+1} wird der Aktuator AT1 über das Steuergerät EM, vorzugsweise ausgelöst durch eine Positionsüberwachung in der Bedieneinheit BE, ohne Eingriff des Benutzers deaktiviert und der Arretierbolzen wird unter der rückstellenden Kraft der Feder BF in Richtung der Verriegelungsstellung bewegt und legt sich unter Einwirkung der Feder BF an eine Gleitfläche GF des Auszugkörpers. Diese Stellung des Arretierbolzens sei als Anlegestellung AS bezeichnet.
1 D) Die Verschiebbarkeit zwischen Auszugkörper und Hauptkörper bleibt in der Anlegestellung AS des Arretierbolzens erhalten und der Bolzen gleitet entlang der Gleitfläche GF, welche in die Öffnung GO_{N+2} mündet.
1 E) Wenn der Arretierbolzen bei fortgesetzter Relativverschiebung zwischen Auszugkörper AK und Hauptkörper HK durch Verfahren des Zugfahrzeugs die Öffnung GO_{N+2} erreicht, wird er unter der Kraft der Schließfeder BF in die Öffnung gedrückt und nimmt wieder die Verriegelungsstellung VS ein, in welcher eine Längsverschiebung des Auszugkörpers gegen den Hauptkörper unterbunden ist. Die Verriegelungsstellung kann auf der Bedieneinrichtung angezeigt werden (V) und dem Fahrer die Freigabe zur Abfahrt signalisieren.

Die Verzögerungszeit für das Halten des Arretierbolzens kann begrenzt werden.

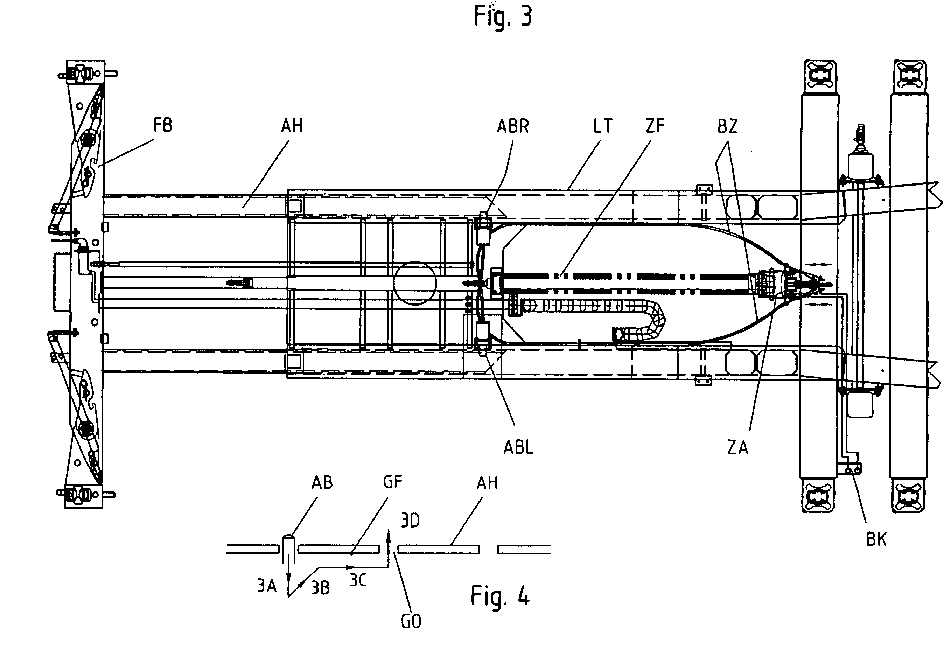

Während im Beispiel der Fig. 1 eine wegabhängige Verzögerung der Bewegung des Arretierelements aus der Lösestellung in Richtung der Verriegelungsstellung stattfindet, zeigt das Beispiel nach Fig. 3 und Fig. 4 an einem teleskopierbaren Frontbalken eines Sattelaufliegers eine vorteilhafte Variante einer zeitabhängigen Verzögerung.

Ein Frontbalken FB ist über zwei Ausziehholme AH in zwei Längsträgern LT eines Fahrgestellrahmens in Längsrichtung LR verschiebbar geführt. An den Längsträgern sind, vorzugsweise symmetrisch zu einer Mittellängsebene des Fahrgestellrahmens zwei Arretierbolzen ABR, ABL befestigt, für welche eine gleiche Bauart mit Schließfeder wie in Fig. 1 angenommen sei. Die Arretierbolzen greifen in in Längsrichtung beabstandete Öffnungen GO in den Ausziehholmen AH ein und sichern diese in diskreten Längspositionen.

Das Bewegen der Arretierbolzen aus der in Fig. 1 gezeichneten Verriegelungsstellung erfolgt im skizzierten Beispiel durch Seilzüge, welche in Seilzugführungen, vorzugsweise nach Art von Bowdenzügen BZ, geführt sind. Die den Arretierbolzen entfernten Enden der Seilzüge sind mit der Stempelstange eines pneumatischen oder hydraulischen Lösezylinders ZA verbunden. Bei Druckbeaufschlagung des Zylinders ZA wird die Stempelstange verschoben und über die Seilzüge werden die Arretierbolzen in der bereits beschriebenen Weise aus der Verriegelungsstellung in eine Lösestellung gezogen und geben die Relativverschiebung der Ausziehholme relativ zu den Längsträgern frei.

Die Relativverschiebung der Ausziehholme relativ zu den Längsträgern in Längsrichtung wird im Beispielfall durch eine druckmittelbetätigte Teleskopzylinderanordnung ZF bewerkstelligt, deren Zylinder am Fahrgestellrahmen befestigt und somit ortsfest bezüglich der Längsträger ist und dessen Stempel mit dem Frontbalken FR, welcher mit den Ausziehholmen eine starre Baueinheit bildet, verbunden ist. Die Teleskopzylinderanordnung arbeitet bidirektional.

Das Bewegen der Arretierbolzen aus der Verriegelungsstellung in die Lösestellung mittels des Lösezylinders ZA wird im skizzierten Beispiel über eine Bedienkonsole BK am Fahrgestellrahmen ausgelöst, an welcher für jede Verschieberichtung je ein Bedienelement vorgesehen ist. Die Betätigung eines der Bedienelemente wird vorteilhaft über Steuerleitungen, insbesondere elektrische Steuerleitungen oder durch Druckluft oder Hydraulik auf die Zylinderanordnung mit Zylindern ZA und ZF übertragen und bewirkt dort zum einen den Start eines Lösevorgangs für die Arretierbolzen und zum anderen eine Richtungsvorgabe für die Verschiebung mittels der Teleskopzylinderanordnung Z. Vorteilhafterweise wird automatisch mit Erreichen der ausgefahrenen Stellung des Zylinders ZA entsprechend der Lösestellung der Arretierbolzen die Zylinderanordnung ZF druckbeaufschlagt. Hierfür kann die Zylinderanordnung ZA auf ein Druckmittelventil für die Zylinderanordnung ZA wirken.

Ein Verschiebevorgang kann beispielsweise wie folgend beschrieben ablaufen, wobei wieder in Fig. 4 der Verlauf der Stellung eines Arretierbolzens veranschaulicht ist.
3A) Durch Betätigen eines der beiden Bedienelemente der Bedienkonsole BK wird die Verschieberichtung vorgewählt und durch Beaufschlagung des Lösezylinders ZA mit Druckmittel, insbesondere Druckluft, werden über die Seilzüge die Arretierbolzen aus der Verriegelungsstellung VS in eine Lösestellung LS bewegt. Mit Erreichen der Lösestellen LS wird zugleich vorzugsweise durch Betätigung eines zu der Zylinderanordnung ZF führenden Ventils die Zylinderanordnung ZF mit Druckmittel beaufschlagt und der Verschiebevorgang eingeleitet.
3B) Mit Erreichen der Lösestellung kann automatisch unmittelbar oder mit vorgebbarer Verzögerungszeit folgend der Druck im Lösezylinder ZA abgebaut werden, z. B. durch Entlüften eines pneumatischen Zylinders ZA, so dass unter der Wirkung der Schließfedern an den Arretierbolzen diese in Richtung der Schließstellung zurück bewegt werden und zugleich der Stempel in den Zylinder ZA eingedrückt wird. Die Lösestellung kann auch gehalten werden, solange das Bedienelement betätigt bleibt. Die Zurückbewegung kann durch langsamen Druckabbau im Lösezylinder ZA gebremst verlaufen. Die Druckmittelzufuhr zur Zylinderanordnung ZF bleibt erhalten, so dass der Verschiebevorgang fortläuft und die Öffnungen GO_{N} der Startposition der Ausziehholme gegen die Arretierbolzen versetzt sind und die Arretierbolzen daher nur bis zu einer Anlegestellung AS an Gleitflächen GF der Ausziehholme zurück bewegt werden. In entsprechender Weise kann der Stempel des Zylinders ZA in einer teilweise ausgeschobenen Stellung verbleiben, auch wenn der Überdruck im Zylinder ZA ganz abgebaut ist.
3C) Die Druckmittelzufuhr zu der Zylinderanordnung ZF bleibt auch während der Anlegestellung der Arretierbolzen erhalten, so dass der Verschiebevorgang fortläuft und die Arretierbolzen unter der Einwirkung der Schließkraft der Federn BF an den Gleitflächen GF der Ausziehholme AH anliegen und entlanggleiten bis zu der nächsten Öffnung GO_{N+1}.
3D) Mit Erreichen der Öffnungen GO_{N+1} werden die Arretierbolzen unter Einwirkung der Schließkraft in diese Öffnungen gedrückt und arretieren in ihrer Verriegelungsstellung die Ausziehholme in der neuen Position. Mit der Rückbewegung der Arretierbolzen in die Verriegelungsstellung VS wird auch der Stempel des Lösezylinders ZA ganz zurückgedrückt. Vorteilhafterweise kann hierüber das Ventil zur Druckmittelzufuhr zu der Zylinderanordnung ZF geschlossen und der Zylinder ZF druckentlastet werden.

Soll die Verschiebung der Ausziehholme bezüglich der Längsträger über mehrere Öffnungen hinweg, z. B. bis GO_{N+2} erfolgen, kann der Verschiebevorgang wiederholt oder durch erneutes Betätigen des Bedienelements vor Eingriff der Arretierbolzen in die Öffnungen einer Zwischenposition (GO_{N+1}) ununterbrochen fortgesetzt werden.

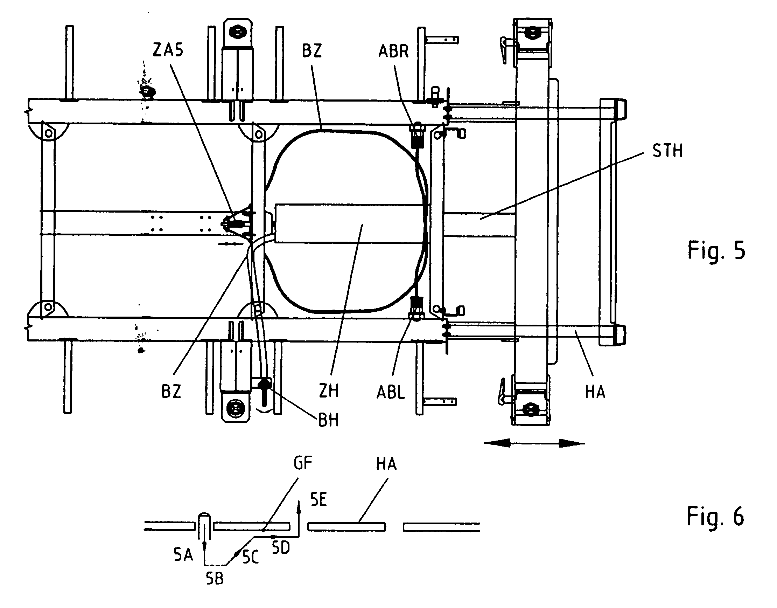

In Fig. 5 ist als weiteres Beispiel ein mittels einer druckmittelbetätigten Zylinderanordnung ZH längsverschiebbarer, in Längsrichtung eines Fahrgestellrahmens geführter Heckauszug HA skizziert, welcher wiederum mittels symmetrisch an den Längsträgern angeordneter Arretierbolzen ABR, ABL in diskreten Längspositionen arretierbar sei. Die Anordnung ist weitgehend äquivalent zu dem Beispiel nach Fig. 3, so dass auf die dort gemachten Ausführungen verwiesen wird. Als Bedienelement sei hier ein Hebel BH an einer Konsole angeordnet, welcher je nach gewünschter Verschieberichtung in eine von zwei Betätigungsrichtungen bewegbar ist. Die Hebelbetätigung kann hier z. B. über eine Seilzugführung BZ vom Bedienelement zu einem Lösezylinder ZA5 übertragen werden.

Zur Veranschaulichung weiterer Möglichkeiten sei angenommen, dass die Rückbewegung der Arretierbolzen aus ihrer Lösestellung LS in eine Anlegestellung AS schnell erfolge und eine Verzögerung während einer Haltephase im wesentlichen durch die Haltedauer des Bedienelements in ausgelenkter Betätigungsstellung durch den Benutzer bestimmt ist. Die Bewegungsphasen 5A, 5D, 5E entsprechen dann den Phasen 3A, 3C, 3D und die langsame Rückbewegung in Phase 3B ist ersetzt durch eine Halteverzögerung 5B und schnelle Rückbewegung 5C.

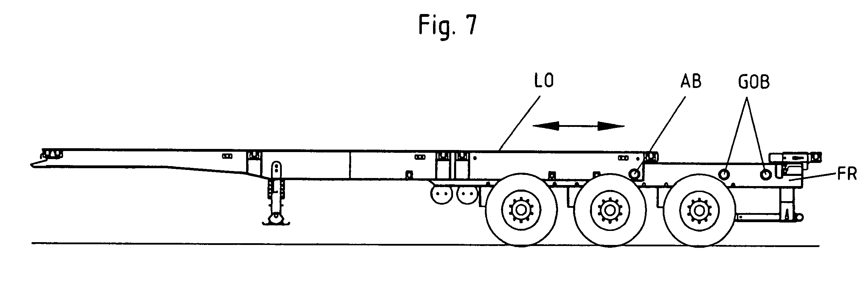

In Fig. 7 ist ein weiters Beispiel für eine Fahrzeuganordnung mit einem Fahrgestellramhen FR und einem demgegenüber längsverschiebbaren Laderahmen LR skizziert. Die Verschiebung von Laderahmen zu Fahrgestellrahmen wird in einem solchen Fall wieder wie bei dem Beispiel zu Fig. 1 mittels eines Zugfahrzeugs bei gebremsten Rädern des Fahrgestellrahmens vorgenommen. Die Betätigung der Arretiereinrichtung erfolgt wie im Beispiel der Fig. 1 bevorzugt ferngesteuert von Fahrerhaus aus. Die Arretiereinrichtung ist vorzugsweise symmetrisch aufgebaut nach Art der Beispiele in Fig. 3 und Fig. 5. In Fig. 7 ist die Position der vorzugsweise zur Mitte des Laderahmens hin an Längsträgern befestigten Arretierbolzen AB sowie von mehreren Öffnungen GOB im Fahrgestellrahmen angedeutet.

Mehrere der verschiedenen beispielhaft beschriebenen Anwendungsbeispiele können auch in einer Fahrzeuganordnung gemeinsam realisiert sein. Einzelne Merkmale und Maßnahmen der gegebenen Beispiele können auch in für den Fachmann erkennbarer Weise übertragen und ausgetauscht und in anderer Kombination realisiert sein.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar. Insbesondere können die Arretiereinrichtungen in anderer, an sich bekannter Weise ausgeführt sein. Für elektronische Steuermittel, insbesondere die Bedieneinheit und das Steuergerät, ist eine große Variationsbreite an Ausführungsformen möglich. Die vorteilhafte Verknüpfung eines Lösezylinders und einer Verschiebe-Zylinderanordnung wie beschrieben ist auf verschiedene, dem Fachmann an sich geläufige Arten möglich. Zeitliche Verzögerungen und wegabhängige Verzögerung können vorteilhaft kombiniert sein.

## Patentansprüche

1. Fahrzeuganordnung mit in Längsrichtung relativ zueinander verschiebbaren und in mehreren unterschiedlichen diskreten Längspositionen arretierbaren ersten (AK, AH, HA) und zweiten Teil, mit einer Arretiereinrichtung, welche wenigstens ein Arretierelement (AB, ABL, ABR) an dem ersten und mehrere Gegenelemente (GO, GOB) an dem zweiten Teil enthält, wobei Arretierelement und/oder Gegenelement in einem Lösevorgang quer zur Längsrichtung aus einer Verriegelungsstellung in eine Lösestellung bewegbar sind, in welcher erster und zweiter Teil mittels einer Verschiebeeinrichtung (ZF, ZH) zwischen einer Startposition und einer Zielposition verschiebbar sind, **dadurch gekennzeichnet, dass** Steuermittel bei Erreichen der Lösestellung der Arretiereinrichtung selbsttätig die Verschiebeeinrichtung in Gang setzen.

2. Anordnung nach Anspruch 1, **dadurch gekennzeichnet, dass** die Verschiebeeinrichtung (ZF, ZH) mit erstem und zweitem Teil verbunden ist.

3. Anordnung nach Anspruch 1 oder 2, **dadurch gekennzeichnet, dass** die Verschiebeeinrichtung (ZF, ZH) druckmittelbetätigt ist.

4. Anordnung nach Anspruch 3, **dadurch gekennzeichnet, dass** die Verschiebeeinrichtung einen druckmittelbetätigten Zylinder enthält.

5. Anordnung nach einem der Ansprüche 1 bis 4, **dadurch gekennzeichnet, dass** die Arretiereinrichtung durch die Steuermittel nach dem Lösevorgang gehalten ist und mit Verzögerung gegenüber dem Lösevorgang spätestens bei Erreichen der Zielposition ohne Einwirken eines Benutzers aus der Löseposition in Richtung der Verriegelungsposition (VS) bewegbar ist.

6. Anordnung nach Anspruch 5, **dadurch gekennzeichnet, dass** die Arretiereinrichtung durch die Stellmittel bereits vor Erreichen der Zielposition aus der Lösestellung (LS) in Richtung der Verriegelungsstellung (VS) in eine Anlegestellung (AS) bewegbar und bis zum Erreichen der Zielposition unter Erhaltung der relativen Verschiebbarkeit der beiden Teile gehalten ist, wobei in der Anlegestellung eine Schließkraft vorliegt, unter deren Einfluss Arretierelement (AB) und Gegenelement (GO) bei Erreichen der Zielposition automatisch in die Verriegelungsstellung bewegt werden.

7. Anordnung nach Anspruch 6, **dadurch gekennzeichnet, dass** in der Anlegestellung das Arretierelement (AB) an einer Gleitfläche (GF) des zweiten Teils unter Einwirkung der Schließkraft anliegt.

8. Anordnung nach einem der Ansprüche 5 bis 7, **dadurch gekennzeichnet, dass** die Verzögerung eine vorgebbare zeitliche Verzögerung beinhaltet.

9. Anordnung nach Anspruch 8, **dadurch gekennzeichnet, dass** die Steuermittel für zeitliche Verzögerung ein elektronisches Zeitglied enthalten.

10. Anordnung nach einem der Ansprüche 5 bis 9, **dadurch gekennzeichnet, dass** die Steuermittel für die zeitliche Verzögerung ein druckmittelbetätigtes monostabiles Stellglied, insbesondere eine selbstentlüftende Zylinderanordnung (ZA) enthalten.

11. Anordnung nach einem der Ansprüche 5 bis 10, **dadurch gekennzeichnet, dass** die Verzögerung vom Verschiebungsweg abhängig ist.

12. Anordnung nach Anspruch 11, **dadurch gekennzeichnet, dass** die Steuermittel mechanische Stelleinrichtungen für die wegabhängige Verzögerung enthalten.

13. Anordnung nach Anspruch 11 oder 12, **dadurch gekennzeichnet, dass** die Steuermittel eine Sensoranordnung zur Weg- und/oder Positionsmessung von erstem Teil relativ zum zweiten Teil enthalten.

14. Anordnung nach einem der Ansprüche 1 bis 13, **dadurch gekennzeichnet, dass** die Steuermittel elektromagnetische Aktuatoren (AT1) und eine elektronische Bedieneinheit (BE) im Fahrerhaus eines Fahrzeugs enthalten.

15. Anordnung nach Anspruch 14, **dadurch gekennzeichnet, dass** die Steuermittel eine Funksteuerverbindung (FV) zwischen der Bedieneinheit (BE) und den Aktuatoren (AT1) umfassen.

16. Anordnung nach einem der Ansprüche 1 bis 15, **dadurch gekennzeichnet, dass** die Steuermittel eine mechanisch und/oder über Druckmittel mit der Arretiereinrichtung verbundene Bedieneinheit (BH) umfassen.

17. Anordnung nach einem der Ansprüche 1 bis 16, **dadurch gekennzeichnet, dass** in einer der Bedieneinheit eine Zielposition (GO_{N+2}) vorwählbar ist, welche mit der Startposition (GO_{N}) wenigstens eine weitere Zwischenposition (GO_{N+1}) einschließt.

18. Anordnung nach einem der Ansprüche 1 bis 17, **dadurch gekennzeichnet, dass** die Verschiebung zwischen erstem und zweitem Teil durch Verfahren eines mit einem Teil verbundenen Zugfahrzeugs bei feststehendem, insbesondere gebremstem zweiten Teil erfolgt.

19. Anordnung nach einem der Ansprüche 1 bis 18, **dadurch gekennzeichnet, dass** erstes und zweites Teil durch einen Fahrgestellrahmen (FR) und einen relativ zu diesem längsverschiebbaren Laderahmen (LO) eines längenverstellbaren Chassis sind.

20. Anordnung nach einem der Ansprüche 1 bis 18, **dadurch gekennzeichnet, dass** erstes und zweites Teil Hauptrohr (HK) und Auszug (AK) einer längenverstellbaren Fahrzeugdeichsel sind.

21. Anordnung nach einem der Ansprüche 1 bis 18, **dadurch gekennzeichnet, dass** erstes und zweites Teil ein Fahrgestellrahmen und ein verstellbarer Heckauszug (HA) sind.

22. Anordnung nach einem der Ansprüche 1 bis 18, **dadurch gekennzeichnet, dass** erstes und zweites Teil ein Fahrgestellrahmen oder Laderahmen (LT) und ein verstellbarer Frontbalken (FB, AH) sind.

23. Anordnung nach einem der Ansprüche 1 bis 22, **dadurch gekennzeichnet, dass** die Anordnung ein motorisiertes Zugfahrzeug und einen Anhänger umfasst.

## Claims

1. Vehicle arrangement comprising a first part (AK, AH, HA) and a second part which can be displaced in relation to one another in the longitudinal direction and can be locked in a plurality of different discrete longitudinal positions, having a locking device which contains at least one locking element (AB, ABL, ABR) on the first part and a plurality of mating elements (GO, GOB) on the second part, it being possible to move the locking element and/or mating element from a locked position to a release position transversely to the longitudinal direction during a release process, in which release position the first and second part can be displaced between a start position and a target position by means of a displacement device (ZF, ZH), **characterized in that** control means automatically start the displacement device when the locking device reaches the release position.

2. Arrangement according to Claim 1, **characterized in that** the displacement device (ZF, ZH) is connected to the first and second part.

3. Arrangement according to Claim 1 or 2,
**characterized in that** the displacement device (ZF, ZH) is operated by a pressure medium.

4. Arrangement according to Claim 3, **characterized in that** the displacement device contains a cylinder which is operated by a pressure medium.

5. Arrangement according to one of Claims 1 to 4, **characterized in that** the locking device is held by the control means after the release process and can be moved, with a delay in relation to the release process, from the release position in the direction of the locked position (VS) without any action on the part of the user at the latest when the target position is reached.

6. Arrangement according to Claim 5, **characterized in that** the locking device can be moved, in the direction of the locked position (VS), from the release position (LS) to a bearing position (AS) by the actuating means as early as before the target position is reached, and is held while maintaining the relative displaceability of the two parts until the target position is reached, with a closing force prevailing in the bearing position and the locking element (AB) and mating element (GO) being automatically moved to the locked position under the influence of the said closing force when the target position is reached.

7. Arrangement according to Claim 6, **characterized in that** the locking element (AB) bears against a sliding surface (GF) of the second part, under the action of the closing force, in the bearing position.

8. Arrangement according to one of Claims 5 to 7, **characterized in that** the delay includes a prescribable time delay.

9. Arrangement according to Claim 8, **characterized in that** the control means for the time delay contains an electronic timer.

10. Arrangement according to one of Claims 5 to 9, **characterized in that** the control means for the time delay contains a monostable actuating element, in particular a self-ventilating cylinder arrangement (ZA), which is operated by a pressure medium.

11. Arrangement according to one of Claims 5 to 10, **characterized in that** the delay is dependent on the displacement path.

12. Arrangement according to Claim 11, **characterized in that** the control means contains mechanical actuating devices for the travel-dependent delay.

13. Arrangement according to Claim 11 or 12, **characterized in that** the control means contains a sensor arrangement for measuring the travel and/or position of the first part in relation to the second part.

14. Arrangement according to one of Claims 1 to 13, **characterized in that** the control means contains electromagnetic actuators (AT1) and an electronic operator control unit (BE) in the driver's cab of a vehicle.

15. Arrangement according to Claim 14, **characterized in that** the control means comprises a radio control connection (FV) between the operator control unit (BE) and the actuators (AT1).

16. Arrangement according to one of Claims 1 to 15, **characterized in that** the control means comprises an operator control unit (BE) which is connected to the locking device mechanically and/or via a pressure medium.

17. Arrangement according to one of Claims 1 to 16, **characterized in that** a target position (GO_{N+2}), which includes at least one further intermediate position (GO_{N+1}) with the start position (GO_{N}), can be preselected in one of the operator control units.

18. Arrangement according to one of Claims 1 to 17, **characterized in that** the displacement between the first and second part is performed by moving a towing vehicle which is connected to one part while the second part is stationary, in particular braked.

19. Arrangement according to one of Claims 1 to 18, **characterized in that** the first and second part are an undercarriage frame (FR) and a loading frame (LO) of a longitudinally displaceable chassis, which loading frame can be longitudinally displaced in relation to the said undercarriage frame.

20. Arrangement according to one of Claims 1 to 18, **characterized in that** the first and second part are a main pipe (HK) and an extension (AK) of a longitudinally adjustable vehicle drawbar.

21. Arrangement according to one of Claims 1 to 18, **characterized in that** the first and second part are an undercarriage frame and an adjustable rear extension (HA).

22. Arrangement according to one of Claims 1 to 18, **characterized in that** the first and second part are an undercarriage frame or loading frame (LT) and an adjustable front bar (FB, AH).

23. Arrangement according to one of Claims 1 to 22, **characterized in that** the arrangement comprises a motorized towing vehicle and a trailer.

## Revendications

1. Agencement d'un véhicule avec une première (AK, AH, HA) et une deuxième parties, susceptibles de se déplacer l'une par rapport à l'autre en direction longitudinale et d'être bloquées dans différentes positions longitudinales discrètes, avec un dispositif de blocage comprenant au moins un élément de blocage (AB, ABL, ABR) sur la première partie et plusieurs contre-éléments (GO, GOB) sur la deuxième partie, l'élément de blocage et/ou le contre-élément étant mobiles en un processus de desserrage à la transversale de la direction longitudinale, d'une position de verrouillage dans une position de desserrage, dans laquelle la première et la deuxième parties sont déplaçables au moyen d'un dispositif de déplacement (ZF, ZH) entre une position de départ et une position d'arrivée, **caractérisé en ce qu'**à l'atteinte de la position de desserrage du dispositif de blocage, des moyens de commande déclenchent automatiquement le dispositif de déplacement.

2. Agencement selon la revendication 1, **caractérisé en ce que** le dispositif de déplacement (ZF, ZH) est relié avec la première et la deuxième parties.

3. Agencement selon la revendication 1 ou 2, **caractérisé en ce que** le dispositif de déplacement (ZF, ZH) est actionné par fluide sous pression.

4. Agencement selon la revendication 3, **caractérisé en ce que** le dispositif de déplacement contient un vérin actionné par fluide sous pression.

5. Agencement selon l'une quelconque des revendications 1 à 4, **caractérisé en ce que** le dispositif de blocage est maintenu par les moyens de commande après le processus de desserrage et **en ce que**, avec une temporisation par rapport au processus de desserrage, il est susceptible de se déplacer sans l'intervention d'un utilisateur, au plus tard à l'atteinte de la position d'arrivée, de la position de desserrage en direction de la position de verrouillage (VS).

6. Agencement selon la revendication 5, **caractérisé en ce que** avant l'atteinte de la position d'arrivée, le dispositif de blocage est mobile par les moyens de réglage, de la position de desserrage (LS) en direction de la position de verrouillage (VS), dans une position d'appui (AS) et **en ce qu'**il est maintenu jusqu'à l'atteinte de la position d'arrivée sous maintien de l'aptitude au déplacement relatif des deux parties, une force de fermeture étant présente en position d'appui, sous l'influence de laquelle, à l'atteinte de la position d'arrivée, l'élément de blocage (AB) et le contre-élément (GO) se déplacent automatiquement dans la position de verrouillage.

7. Agencement selon la revendication 6, **caractérisé en ce que**, en position d'appui, l'élément de blocage (AB) s'appuie sur une surface de glissement (GF) de la deuxième partie, sous l'action de la force de fermeture.

8. Agencement selon l'une quelconque des revendications 5 à 7, **caractérisé en ce que** la temporisation contient une temporisation horaire prédéfinissable.

9. Agencement selon la revendication 8, **caractérisé en ce que** les moyens de commande comprennent un système temporisé électronique, pour la temporisation horaire.

10. Agencement selon l'une quelconque des revendications 5 à 9, **caractérisé en ce que** les moyens de commande comprennent pour la temporisation horaire un composant de réglage monostable actionné par fluide sous pression, notamment un agencement de vérins à autoventilation (ZA).

11. Agencement selon l'une quelconque des revendications 5 à 10, **caractérisé en ce que** la temporisation dépend de la course de déplacement.

12. Agencement selon la revendication 11, **caractérisé en ce que** les moyens de commande comprennent des dispositifs de réglage mécaniques pour la temporisation dépendant de la course.

13. Agencement selon la revendication 11 ou 12, **caractérisé en ce que** les moyens de commande comprennent un agencement de capteurs pour la mesure de la course et/ou de la position de la première partie par rapport à la deuxième partie.

14. Agencement selon l'une quelconque des revendications 1 à 13, **caractérisé en ce que** les moyens de commande comprennent des actionneurs électromagnétiques (AT1) et une unité de service électronique (BE) dans la cabine conducteur d'un véhicule.

15. Agencement selon la revendication 14, **caractérisé en ce que** les moyens de commande englobent une liaison par radiocommande (FV) entre l'unité de service (BE) et les actionneurs (AT1).

16. Agencement selon l'une quelconque des revendications 1 à 15, **caractérisé en ce que** les moyens de commande englobent une unité de service (BH) reliée mécaniquement et/ou par l'intermédiaire de fluides sous pression avec le dispositif de blocage.

17. Agencement selon l'une quelconque des revendications 1 à 16, **caractérisé en ce que** dans l'une des unités de service, une position d'arrivée (GO_{N+2}) peut être présélectionnée, laquelle avec la position de départ (GO_{N}) inclut au moins une position intermédiaire supplémentaire (GO_{N+1}).

18. Agencement selon l'une quelconque des revendications 1 à 17, **caractérisé en ce que** le déplacement entre la première et la deuxième parties est assuré par déplacement d'un véhicule tracteur relié à l'une des parties, alors que la deuxième partie est stationnaire, notamment freinée.

19. Agencement selon l'une quelconque des revendications 1 à 18, **caractérisé en ce que** la première et la deuxième parties sont un cadre de châssis (FR) et un cadre de chargement (LO), déplaçable en longueur vers ledit cadre de châssis, d'un châssis réglable en longueur.

20. Agencement selon l'une quelconque des revendications 1 à 18, **caractérisé en ce que** la première et la deuxième parties sont un tube principal (HK) et une rallonge (AK) d'un timon de véhicule réglable en longueur.

21. Agencement selon l'une quelconque des revendications 1 à 18, **caractérisé en ce que** la première et la deuxième parties sont un cadre de châssis et une rallonge arrière (HA) réglable.

22. Agencement selon l'une quelconque des revendications 1 à 18, **caractérisé en ce que** la première et la deuxième parties sont un cadre de châssis ou cadre de chargement (LT) et une barre frontale réglable (FB, AH).

23. Agencement selon l'une quelconque des revendications 1 à 22, **caractérisé en ce que** l'agencement englobe un véhicule tracteur motorisé et une remorque.
